# EUROPÄISCHE PATENTSCHRIFT

(11) **EP 2 130 695 B1**
(45) Veröffentlichungstag und Bekanntmachung des Hinweises auf die Patenterteilung: **15.05.2013**
(21) Anmeldenummer: 09007506.0
(22) Anmeldetag: 06.06.2009
(51) Int. Cl.: B60D 1/06, B60D 1/52

(54) **Kupplungsvorrichtung für ein Kraftfahrzeug**
Coupling device for a motor vehicle
Dispositif d'embrayage pour un véhicule automobile

(30) Priorität: 06.06.2008 DE 202008007582 U
(43) Veröffentlichungstag der Anmeldung: 09.12.2009
(60) Teilanmeldung: 12005025.7
(73) Patentinhaber: WESTFALIA - Automotive GmbH, 33378 Rheda-Wiedenbrück (DE)
(72) Erfinder: Abels, Frank, 29633 Munster (DE)
(74) Vertreter: Bregenzer, Michael

(56) Entgegenhaltungen:
- EP-A- 0 047 961
- DE-A1- 10 355 854
- DE-A1-102008 018 822
- GB-A- 2 122 961

## Beschreibung

Die Erfindung betrifft eine Kupplungsvorrichtung für ein Kraftfahrzeug mit einem Kupplungskugelträger, der an einer Trägeraufnahme schwenkbeweglich oder einsteckbar angeordnet und über ein erstes Verriegelungselement in einer Kuppelstellung spielfrei fixierbar ist gemäß dem Oberbegriff des Anspruchs 1.

Eine derartige Kupplungsvorrichtung geht z.B. aus EP 0 047 961 A1 hervor.

Einen weiteren Gegenstand der Erfindung bildet eine Verriegelungsvorrichtung für Kraftfahrzeugkupplungsvorrichtungen mit einem ersten Verriegelungselement, über welches ein Kupplungsträger in einer Kuppelstellung bezüglich eines Trägers oder einer Trägeraufnahme fixierbar ist.

Kupplungsvorrichtungen dieser Art werden im Heckbereich von Kraftfahrzeugen, beispielsweise von PKWs, angeordnet und dienen zum Anhängen eines Anhängerfahrzeugs. Die Kupplungsvorrichtungen weisen einen die Kupplungskugel tragenden Kupplungskugelträger auf, der in einer Kuppelstellung ein Anhängen eines Anhängers ermöglicht. In der Kuppelstellung steht der Kupplungskugelträger, den man alternativ auch als Kugelhals oder Kupplungsarm bezeichnen kann, unter Einhaltung eines gewissen Abstands zum Fahrzeugheck bzw. dem dort angeordneten Stoßfänger über die Fahrzeugkontur nach hinten ab. Bei bekannten Kupplungsvorrichtungen wird der Kupplungsträger an einer Trägeraufnahme schwenkbeweglich oder einsteckbar angeordnet, so dass er nur bei Bedarf in die Kuppelstellung bringbar ist. Der Kupplungskugelträger kann entweder durch Verschwenken aus einer Wartestellung in die Kuppelstellung überführt werden, alternativ ist es möglich, den Kupplungskugelträger durch Einstecken in die Kuppelstellung zu überführen und den Kupplungsträger ansonsten beispielsweise im Kofferraum des Fahrzeugs zu bevorraten.

In der Kuppelstellung wird der Kupplungskugelträger über ein Verriegelungselement fixiert, so dass der Kupplungskugelträger auch bei an der Kupplungskugel angreifenden Kräften in der Kuppelstellung gehalten wird. Diese Fixierung erfolgt zumeist spielfrei, um störende Klappergeräusche wie auch einen Verschleiß der im Kraftfluss liegenden Teile möglichst gering zu halten.

Diese Art der Fixierung hat sich in der Vergangenheit bei bekannten Kupplungs- bzw. Verriegelungsvorrichtungen zwar durchaus bewährt, jedoch besteht die Gefahr, dass das Verriegelungselement unter dem Einfluss der Last eines angehängten Anhängerfahrzeugs beispielsweise aufgrund von Materialfehlern nachgibt, wodurch die Fixierung gelöst werden kann und gefährliche Fahrsituationen entstehen können.

Aufgabe der Erfindung ist es, eine Kupplungsvorrichtung sowie eine Verriegelungsvorrichtung der eingangs genannten Art anzugeben, bei welcher die Gefahr eines ungewollten Lösens der Fixierung reduziert ist.

Diese Aufgabe durch eine Kupplungsvorrichtung gemäß der technischen Lehre des Anspruchs 1 gelöst.

Durch das Vorsehen eines zweiten Verriegelungselements in redundanter Anordnung zu dem ersten Verriegelungselement wird eine erhöhte Fahrsicherheit erreicht. Die Wahrscheinlichkeit, dass gefährliche Fahrsituationen auftreten, wird deutlich reduziert. Selbst bei einem Bruch des ersten Verriegelungselements, etwa in Folge eines Materialfehlers oder infolge Materialermüdung, wird der Kupplungskugelträger weiterhin über das zweite Verriegelungselement in der Kuppelstellung gehalten.

Das erste und das zweite Verriegelungselement verriegeln den Kupplungskugelträger in ihrer jeweiligen Verriegelungsstellung bezüglich der Trägeraufnahme. So ist der Kupplungskugelträger in der Kuppelstellung festgelegt. Es ist auch möglich, dass das erste und/oder das zweite Verriegelungselement den Kupplungskugelträger auch in einer Ruhestellung verriegeln, in die der Kupplungskugelträger bei Nichtgebrauch bewegbar ist. In der Ruhestellung ist der Kupplungskugelträger z.B. hinter einem Stoßfänger des Kraftfahrzeugs positioniert.

Als Trägeraufnahme im Sinne der Erfindung wird auch ein Lager verstanden, an dem der Kupplungskugelträger schwenkbeweglich und/oder linear beweglich gelagert ist. Man kann die Trägeraufnahme auch als Träger bezeichnen. Die Trägeraufnahme bzw. der Träger ist zweckmäßigerweise fahrzeugfest.

In vorteilhafter Ausgestaltung des Erfindungsgedankens wird vorgeschlagen, dass die Fixierung über das erste Verriegelungselement spielfrei und die Fixierung über das zweite Verriegelungselement spielbehaftet ist, wodurch unerwünschte Klappergeräusche sowie erhöhter Verschleiß vermieden und gleichzeitig eine für die Verriegelung ungünstige Doppelpassung vermieden wird.

Das erste Verriegelungselement und/oder das zweite Verriegelungselement ist in seine den Kupplungskugelträger bezüglich der Trägeraufnahme festlegende Verriegelungsstellung federbelastet.

In weiterer Ausgestaltung wird vorgeschlagen, dass das zweite Verriegelungselement über eine Feder selbsttätig in Richtung seiner Verriegelungsstellung bewegbar ist. Es ist auch möglich, dass für das zweite Verriegelungselement ein zweiter, von einem Antrieb für das erste Verriegelungselement separater Antrieb vorgesehen ist, der das zweite Verriegelungselement selbsttätig in die den Kupplungskugelträger fixierende Verriegelungsstellung betätigt. Der zweite Antrieb wird z.B. über einen Sensorschalter aktiviert, der abhängig von einer Stellung des Kupplungskugelträgers den zweiten Antrieb ein- und/oder ausschaltet.

Das zweite Verriegelungselement ist vorteilhaft nach Art einer federbelasteten Raste ausgebildet, so dass es nicht erforderlich ist, die Bewegung des zweiten Verriegelungselements in dessen Verriegelungsstellung über einen separaten Antrieb zu steuern. Es wäre aber möglich, für das zweite Verriegelungselement einen separaten Antrieb vorzusehen, z.B. einen elektromotorischen und/oder hydraulischen und/oder pneumatischen Antrieb.

Weiter wird vorgeschlagen, dass das erste Verriegelungselement über einen Antrieb in seine Verriegelungsstellung bewegbar ist. Über den Antrieb lässt sich das Verriegelungselement bedienerfreundlich lösen, wenn der Kupplungskugelträger aus der Kuppelstellung in die Wartestellung überführt werden soll. In diesem Zusammenhang ist es von Vorteil, wenn der Antrieb ein elektromotorischer, hydraulischer oder pneumatischer Antrieb ist.

Weiter wird vorgeschlagen, dass beim Lösen des ersten Verriegelungselements das zweite Verriegelungselement über ein Mitnahmeelement, z.B. mittels einer Klinke, entgegen der Kraft einer Feder mitgenommen wird. Hierdurch ergibt sich eine einfache Bauweise der Kupplungsvorrichtung, da ein Antrieb zum Lösen beider Verriegelungselemente ausreicht.

Vom konstruktiven Vorteil ist ferner eine Ausgestaltung, bei der das Mitnahmeelement nach Art einer schwenkbeweglichen oder insbesondere frei drehbaren, an dem zweiten Verriegelungselement angeordneten Wippe oder Klinke gestaltet ist oder eine solche aufweist.

Weiter wird vorgeschlagen, dass das zweite Verriegelungselement nach Art einer Raste ausgebildet ist und unter Erzeugung eines hörbaren Rastgeräusches an dem Kugelkupplungsträger verriegelt. Hierdurch erhält der Bediener der Kupplungsvorrichtung eine akustische Rückmeldung darüber, ob die von ihm vorgenommenen Handgriffe beim Schwenken bzw. Einstecken des Kupplungskugelträgers in die Kuppelstellung korrekt durchgeführt wurden.

Weiter wird vorgeschlagen, dass eine Sensoreinheit vorgesehen ist, die die Kupplungsstellung des Kupplungskugelträgers an der Trägeraufnahme erkennt. Sodann kann die Verriegelung des Kupplungskugelträgers an der Trägeraufnahme erfolgen.

In diesem Zusammenhang ist es von Vorteil, wenn die Sensoreinheit bei Erkennung der Kuppelstellung ein Signal abgibt, mit welchem ein motorischer Antrieb zum Verriegeln des ersten Verriegelungselements ansteuerbar ist, wodurch die doppelte Verriegelung insgesamt selbsttätig arbeitet, ohne dass der Bediener irgendwelche Verriegelungselemente manuell betätigen müsste.

Weiter wird vorgeschlagen, dass der Kupplungsträger mit Erreichen der Kuppelstellung über das zweite Verriegelungselement an der Trägeraufnahme ortsfest gehalten wird. Der Bediener muss nicht abwarten, bis das insbesondere motorisch angetriebene erste Verriegelungselement verriegelt, sondern kann bei Erreichen der Kuppelstellung die Hand von dem Kupplungskugelträger nehmen, ohne dass zu befürchten steht, dass sich dieser wieder löst.

Darüber hinaus wird zur Lösung der vorstehenden Aufgabe bei einer Verriegelungsvorrichtung der eingangs genannten Art vorgeschlagen, dass ein zweites Verriegelungselement vorgesehen ist, über welches der Kupplungskugelträger in redundanter Anordnung zu dem ersten Verriegelungselement fixierbar ist.

In einer Ausgestaltung wird vorgeschlagen, dass das zweite Verriegelungselement über eine Feder selbsttätig in Richtung seiner Verriegelungsstellung bewegbar ist. Es ergibt sich eine einfache Bauweise des als mechanische Raste ausgebildeten zweiten Verriegelungselements.

Ferner wird vorgeschlagen, dass das erste Verriegelungselement über einen Antrieb in seine Verriegelungsstellung bewegbar ist. In diesem Zusammenhang ist es von Vorteil, wenn der Antrieb ein elektromotorischer, pneumatischer oder hydraulischer Antrieb ist.

In Ausgestaltung der Erfindung wird weiter vorgeschlagen, dass beim Lösen des ersten Verriegelungselements das zweite Verriegelungselement über ein Mitnahmeelement entgegen der Kraft einer Feder mitgenommen wird. Es ergibt sich eine einfache Bauweise der Verriegelungsvorrichtung, bei der ein Antrieb zum Lösen beider Verriegelungselemente ausreicht.

Eine weitere Ausgestaltung sieht vor, dass das Mitnahmeelement nach Art einer frei drehbaren, an dem zweiten Verriegelungselement angeordneten Wippe gestaltet ist.

Weiter wird vorgeschlagen, dass eine Sensoreinheit zur Erkennung der Kupplungsstellung des Kupplungskugelträgers vorgesehen ist.

Schließlich wird vorgeschlagen, dass die Sensoreinheit bei Erkennung der Kuppelstellung ein Signal abgibt, mit welchem ein Antrieb zum Verriegeln des Verriegelungselements ansteuerbar ist.

Weitere Einzelheiten und Vorteile einer erfindungsgemäßen Kupplungsvorrichtung bzw. einer erfindungsgemäßen Verriegelungsvorrichtung werden nachfolgend unter Zuhilfenahme der beigefügten Zeichnungen eines Ausführungsbeispiels erläutert. Darin zeigen:
- Fig. 1: eine perspektivische Darstellung einer Kupplungsvorrichtung mit zugehöriger Verriegelungsvorrichtung,
- Fig. 2: eine der Fig. 1 entsprechende Darstellung unter Weglassung der Trägeraufnahme,
- Fig. 3: eine perspektivische Ansicht der Verriegelungsvorrichtung,
- Fig. 4: eine Schnittdarstellung entlang der Mittelebene der Kupplungsvorrichtung,
- Fig. 5: eine vergrößerte Schnittdarstellung durch die Kupplungsvorrichtung im Bereich der Trägeraufnahme ge- mäß der in Fig. 3 mit A-A bezeichneten Schnittebene und
- Fig. 6a-g: verschiedene Stadien des Verriegelungsvorgangs in einer der Fig. 5 entsprechenden Darstellung.

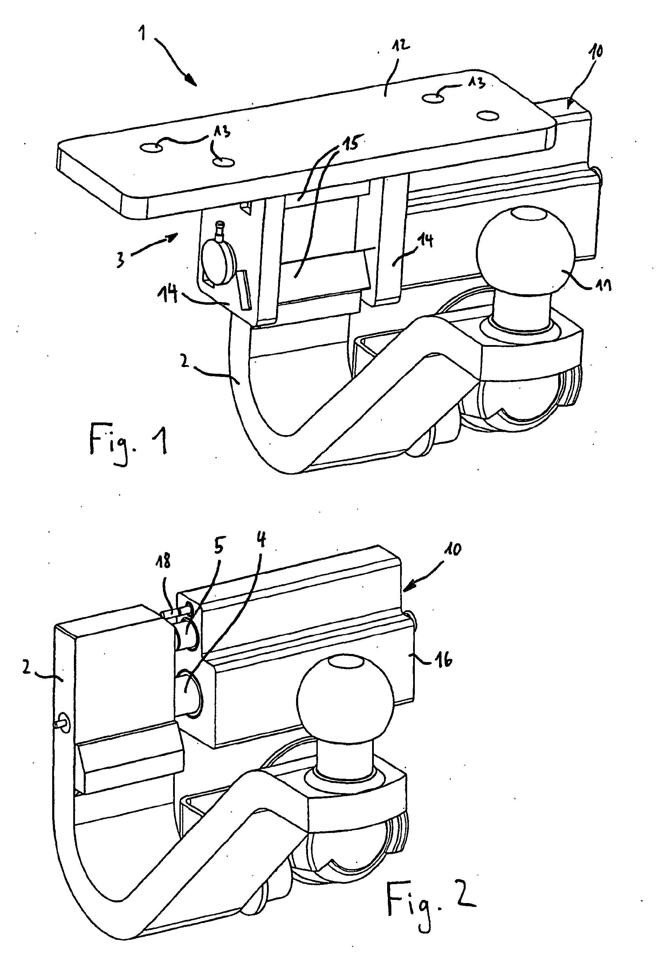

In Fig. 1 dargestellt ist eine Kupplungsvorrichtung 1, bei der ein an seinem freien Ende eine Kupplungskugel 11 tragender Kupplungskugelträger 2 in eine Trägeraufnahme 3 von unten her eingesteckt und an dieser über eine Verriegelungsvorrichtung 10 verriegelt ist.

Durch das Einstecken des Kupplungskugelträgers 2 in die Trägeraufnahme 3 wird der Kupplungskugelträger 2 bzw. die Kupplungskugel 11 in die Kuppelstellung verbracht. Die Erfindung ist jedoch nicht auf solche Einsteckkupplungen beschränkt, sondern kann gleichermaßen auch bei Schwenkkupplungen, bei denen der Kupplungskugelträger 2 schwenkbeweglich innerhalb der Trägeraufnahme 3 von einer verdeckt liegenden Position, beispielsweise innerhalb eines Stoßfängers, in die Kuppelstellung verschwenkbar ist, angewendet werden.

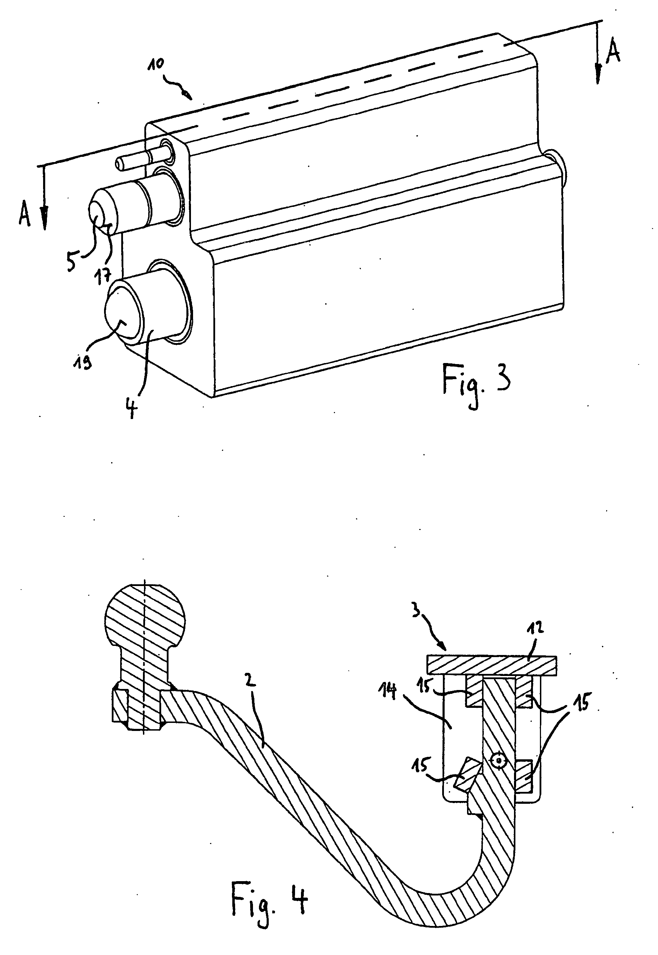

Die Trägeraufnahme 3 weist eine Flanschplatte 12 auf, die an einem Querträger im Heckbereich des Fahrzeugs über Befestigungsbohrungen 13 festlegbar ist. Unterhalb der Flanschplatte 12 erstrecken sich im rechten Winkel zwei Aufnahmeplatten 14, die über Halteelemente 15 miteinander verbunden sind, zwischen denen der Kupplungskugelträger 2 von unten her eingesteckt ist, vgl. auch Fig. 4.

Seitlich neben einer der beiden Aufnahmeplatten 14 ist die Verriegelungsvorrichtung 10 angeordnet, die in der dargestellten Kuppelstellung ein Herausrutschen des Kupplungskugelträgers 2 aus dem Raum zwischen den Aufnahmeplatten 14 bzw. den Halteelementen 15 verhindert. Über die Verriegelungsvorrichtung 10 wird der Kupplungskugelträger 2 in der Kupplungsstellung spielfrei an der Trägeraufnahme 3 fixiert.

Wie sich der Darstellung in Fig. 2 entnehmen lässt, weist die Verriegelungsvorrichtung 10 ein erstes Verriegelungselement 4 sowie ein zweites Verriegelungselement 5 auf, die aus dem Gehäuse 16 der Verriegelungsvorrichtung 10 stirnseitig in Richtung einer Seitenfläche des Kupplungskugelträgers 2 hinausgeführt sind, wo sie in dort vorgesehene Ausnehmungen eingreifen und auf diese Weise eine Fixierung des Kupplungskugelträgers 2 bewirken. Oberhalb der beiden Verriegelungselemente 4, 5 ist ferner ein Sensorelement 18 zu erkennen, das gleichfalls aus der Stirnseite des Gehäuses 16 hinausgeführt ist und auf dessen Funktion später eingegangen werden wird.

Wie die perspektivische Darstellung der Verriegelungsvorrichtung 10 in Fig. 3 erkennen lässt, sind die beiden Verriegelungselemente 4, 5 von insgesamt zylindrischer Form, wobei am freien Ende des zweiten Verriegelungselements 5 eine Schrägfläche bzw. Fase 17 vorgesehen ist und am freien Ende des ersten Sensorelements 4 eine Kugelfläche 19.

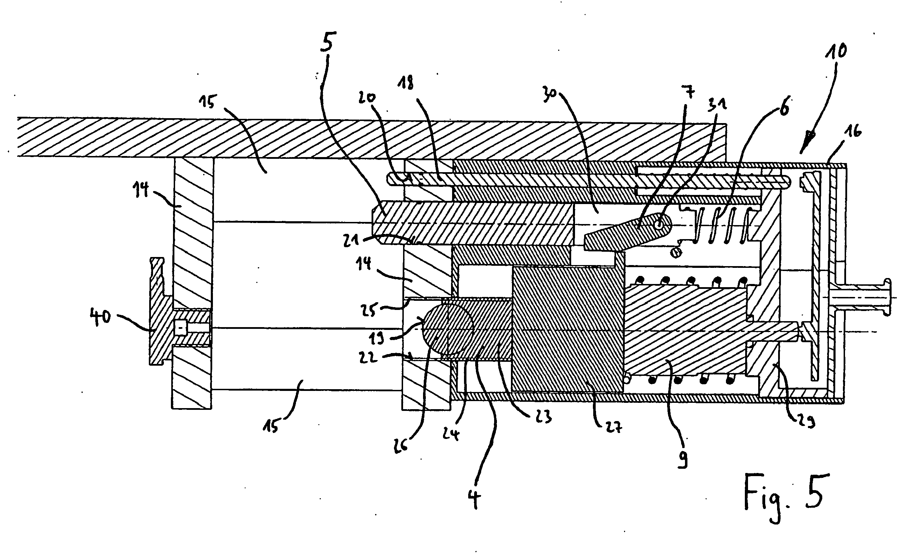

Einzelheiten der Fixierung des Kupplungskugelträgers 2 in dessen Kuppelstellung werden nachfolgend anhand der Darstellung in Fig. 5 erläutert.

Die Verriegelungsvorrichtung 10 ist seitlich an eine der beiden Aufnahmeplatten 14 so angeflanscht, dass die Verriegelungselemente 4, 5 und das Sensorelement 18 mit in der Aufnahmeplatte 14 vorgesehenen Öffnungen 20, 21 und 22 so fluchten, dass die Verriegelungselemente 4, 5 wie auch das Sensorelement 18 in den Zwischenraum zwischen den beiden Aufnahmeplatten 14 im Bereich zwischen den Halteelementen 15 eintreten können.

Die einzelnen Elemente der Verriegelungsvorrichtung 10 sind innerhalb eines Gehäuses 16 angeordnet, aus dessen Stirnseite die Verriegelungselemente 4, 5 und das Sensorelement 18 hin-und her bewegbar herausragen.

Das erste Verriegelungselement 4 ist über einen Antrieb angetrieben, der beim Ausführungsbeispiel von einem Elektromotor gebildet wird. Bei Bestromung des Elektromotors 9 wird ein Schaft 23 des Verriegelungselements 4 in Rotation versetzt. Der Schaft 23 weist ein Außengewinde 24 auf, welches in ein in der Öffnung 22 vorgesehenes Innengewinde 25 eingreift. Bei Betätigung des Elektromotors 9 beginnt der Schaft 23 zu rotieren, wodurch die am freien Ende des Verriegelungselements 4 vorgesehene Kugelfläche 19 in Richtung des zwischen den Aufnahmeplatten 14 vorgesehenen Halteraums bewegt wird. Die Kugelfläche 19 ist Teil eines in das freie Ende des Schafts 23 eingepressten oder einstückig an diesem angeformten Kugelkörpers 26. Der Elektromotor 9 ist an einem Lagerelement 27 festgelegt, in welchem der Schaft 23 des ersten Verriegelungselements 4 drehbar gelagert ist. Darüber hinaus ist eine Spiralfeder 28 vorgesehen, die den Antrieb 9 umschließt und sich zwischen einer Wand 29 des Gehäuses 16 sowie einer Stirnseite des Lagerelements 27 erstreckt, wodurch das Lagerelement 27 in Richtung der Verriegelungsstellung des Verriegelungselements 4 mit einer Kraft beaufschlagt wird.

Oberhalb des ersten Verriegelungselements 4 ist das zweite Verriegelungselement 5 zu erkennen, das nach Art einer mechanischen Raste über eine Feder 6 in Richtung der Verriegelungsstellung mit einer Kraft beaufschlagt wird. Sofern das Verriegelungselement 5 nicht axial mit einer gegen die Feder 6 wirkenden Kraft beaufschlagt oder blok-kiert wird, befindet es sich stets in der in Fig. 5 dargestellten Verriegelungsstellung. Das zweite Verriegelungselement 5 weist im Bereich seines hinteren Endes eine Ausnehmung 30 auf, in welcher ein nach Art einer frei drehbaren Wippe gestaltetes Mitnahmeelement 7 frei drehbar um eine Achse 31 aufgenommen ist.

Das zweite Verriegelungselement 5 ist redundant zu dem ersten 4 angeordnet, so dass die Fixierung bei Ausfall des ersten Verriegelungselements 4 über das Verriegelungselement 5 aufrechterhalten bleibt. Dies allerdings zweckmäßigerweise mit einem gewissen Spiel, so dass der Ausfall des ersten Verriegelungselements 4 für den Fahrzeugführer beispielsweise anhand von Klappergeräuschen erkennbar ist.

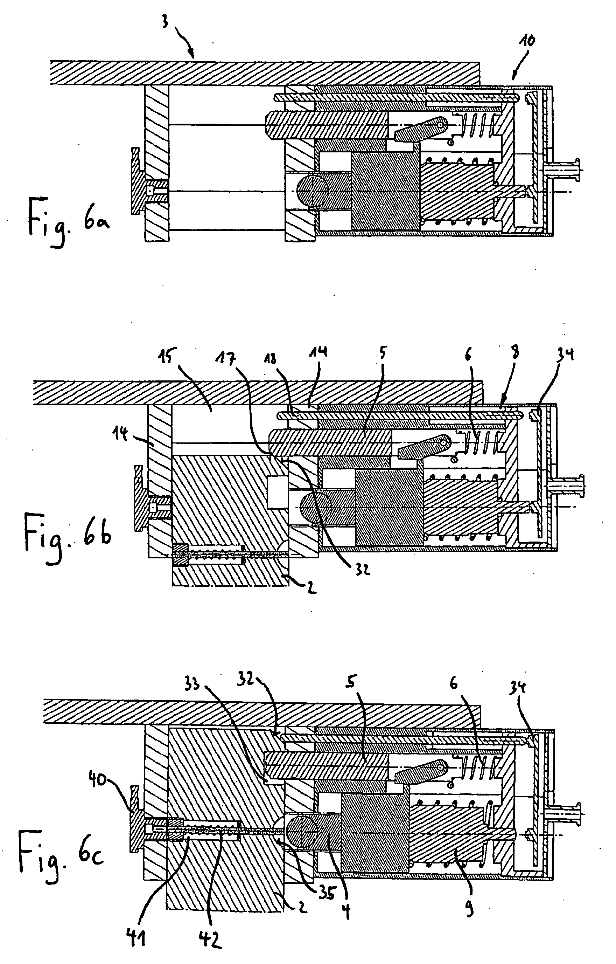

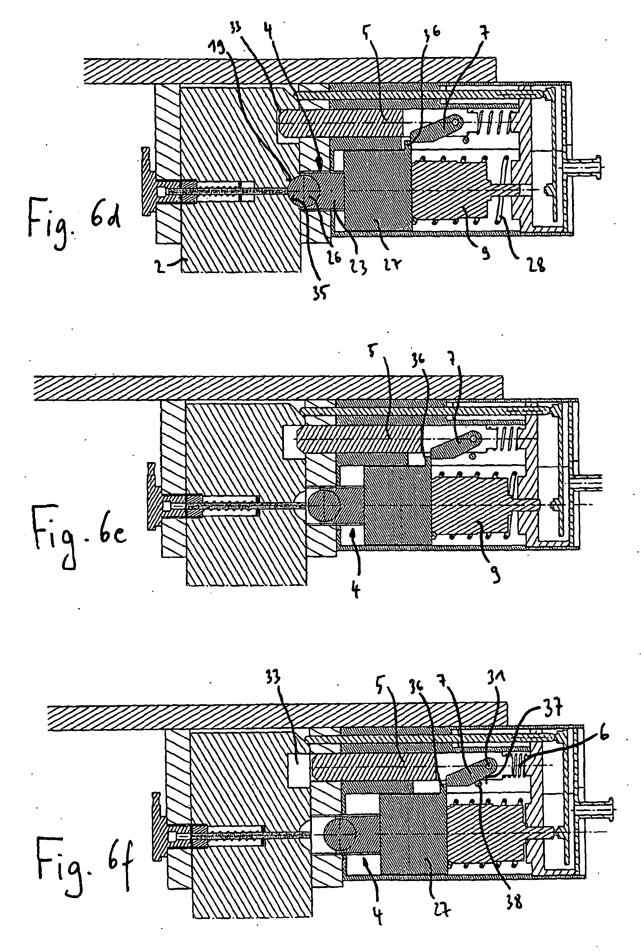

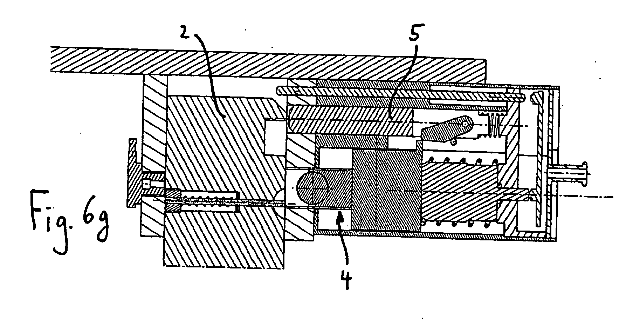

Einzelheiten des Verriegelungsvorgangs werden nachfolgend unter Zuhilfenahme der Figuren 6a - 6g beschrieben, wobei auch auf die Funktion der Sensorelemente 18 und 40 eingegangen werden wird.

Die in Fig. 6a dargestellte, der Stellung in Fig. 5 entsprechende Stellung entspricht der Ausgangsstellung, in der sich die Kupplungsvorrichtung 1 befindet, wenn das Ankuppeln eines Anhängerfahrzeugs nicht gewünscht ist. In dieser Stellung ist der Kupplungskugelträger 2 nicht in die Trägeraufnahme 3 eingesteckt, sondern befindet sich etwa im Kofferraum des Fahrzeugs oder an einem anderen Aufbewahrungsort.

Wenn ein Anhängerfahrzeug angekuppelt werden soll, nimmt der Bediener den Kupplungskugelträger 2 und führt diesen gemäß Fig. 6b von Hand in den von den Aufnahmeplatten 14 und den Halteelementen 15 gebildeten Zwischenraum ein. Der Kupplungskugelträger 2 weist an seinem in Einführrichtung betrachtet vorderen Ende eine Schrägfläche 32 auf, die beim Einschieben des Kupplungsträgers 2 in Anlage mit der am freien Ende des zweiten Verriegelungselements 5 vorgesehenen Schrägfläche 17 gelangt. Beim weiteren Einschieben wird über den Kupplungskugelträger 2 und die aneinander anliegenden Schrägflächen 32, 17 eine Axialkraft auf das zweite Verriegelungselement 5 ausgeübt, die dazu führt, dass die Feder 6 gestaucht wird und das zweite Verriegelungselement 5 aus dem Raum zwischen den Platten 14 zurückgeschoben wird, bis es bündig mit der Innenseite der Aufnahmeplatte 14 steht. Beim weiteren Einschieben gleitet der Kupplungskugelträger 2 oberhalb der Stirnfläche des zweiten Verriegelungselements 5 entlang, bis eine an dem Kupplungskugelträger 2 vorgesehene Ausnehmung 33 eine solche Stellung gegenüber dem zweiten Verriegelungselement 5 einnimmt, dass dieses, getrieben von der Feder 6, in die Öffnung 33 eintreten kann. Ab diesem Moment ist der Kupplungsträger 2 in der Trägeraufnahme 3 gesichert. Der Bediener kann seine Hand von dem Kupplungskugelträger 2 lösen, ohne warten zu müssen, bis das erste, angetriebene Verriegelungselement 4 verriegelt.

Beim Eintreten des zweiten Verriegelungselements 5 in die Öffnung 33 kommt es darüber hinaus zu einem für den Bediener der Kupplungsvorrichtung deutlich hörbaren Rast- bzw. Klickgeräusch, welches dem Bediener signalisiert, dass der Kupplungskugelträger 2 die Kuppelstellung erreicht hat. Der Bediener erhält eine Information darüber, dass das von ihm durchgeführte manuelle Einstecken korrekt durchgeführt wurde. Da die weiteren Vorgänge des Verriegelns automatisch ablaufen, kann er bei Wahrnehmung des Rastgeräusches davon ausgehen, dass der Kupplungskugelträger 2 korrekt fixiert ist.

Das Erreichen der Kuppelstellung wird darüber hinaus auch über eine Sensoreinheit 8, bestehend aus einem stiftförmigen Sensorelement 18 und einem Tastschalter 34 erkannt. Beim Hineinschieben des Kugelkupplungsträgers 2 wird nämlich über die Schrägfläche 32, welche schon für das Zurückschieben des zweiten Verriegelungselements 5 sorgte, auch das Sensorelement 18 nach hinten geschoben. Durch dieses Nachhintenschieben des Sensorelements 18 wird bei Erreichen der Kuppelstellung parallel zur Verrastung des zweiten Verriegelungselements 5 auch der Tastschalter 34 kontaktiert, welcher über ein elektrisches Signal den Motor 9 zur Verriegelung des ersten Verriegelungselements 4 veranlasst.

Über den Elektromotor 9 wird der Schaft 23 des zweiten Verriegelungselements 4 in Drehung versetzt, wodurch sich die Einheit aus Schaft 23, Lagerelement 27 und Elektromotor 9 entsprechend der Steigung der Gewinde 24, 25 in Richtung der Verriegelungsstellung bewegt, und zwar unterstützt von der Feder 28. Beim Verriegeln des ersten Verriegelungselements 4 tritt die Kugelfläche 19 des Kugelkörpers 26 in eine korrespondierend gestaltete Kugelaufnahme 35 an der Seitenwand des Kupplungskugelträgers 2 ein, wodurch der Kupplungskugelträger 2 in allen Richtungen spielfrei und über den Druck der Kugel 26 sicher fixiert wird. Ab diesem Moment ist der Kupplungskugelträger 2 spielfrei fixiert.

Die zuvor erfolgte Verriegelung über das zweite Verriegelungselement 5 ist spielbehaftet, da die Ausnehmung 33 des Kupplungskugelträgers 2 größer ist als der Durchmesser des zweiten Verriegelungselements 5. Durch ein gewisses Übermaß des Abstands zwischen der Ausnehmung 33 und der Kugelaufnahme 35 des Kupplungskugelträgers 2 wird eine Doppelpassung über die beiden Verriegelungselemente 4, 5 verhindert.

Wie sich der Darstellung in Fig. 6c bzw. 6d weiter entnehmen lässt, gleitet ein Vorsprung 36 des Lagerelements 27 bei der Betätigung des ersten Verriegelungselements 4 unterhalb des Mitnahmeelements 7 hindurch, bis dieses in der Verriegelungsstellung selbsttätig in eine Position hinter dem Vorsprung 36 schwenkt. Beim Lösen des ersten Verriegelungselements 4 über den Elektromotor 9 wird daher gleichsam auch das zweite Ver-Verriegelungselement 5 durch die Anlage des Vorsprungs 36 an dem Mitnahmeelement 7 mitgenommen, so dass durch Betätigung des einzigen Motors 9 beide Verriegelungselemente 4, 5 gleichsam gelöst werden, vgl. Fig. 6e.

Sobald das zweite Verriegelungselement 5 beim Lösen der Fixierung aus der Ausnehmung 33 herausgetreten ist, führt das weitere Zurückziehen des ersten Verriegelungselements 4 dazu, dass das Mitnahmeelement 7 mit einer Seitenfläche in Anlage an einen gehäusefesten Bolzen 38 gelangt. Hierdurch beginnt das Mitnahmeelement um die Achse 31 nach oben zu schwenken, bis der Hintergriff des Mitnahmeelements 7 hinter dem Vorsprung 36 des Lagerelements 27 gelöst wird, die gestauchte Feder 6 entspannt und das zweite Verriegelungselement 5 in die Ausgangslage gemäß Fig. 6a zurückfedern kann.

Wie sich der Darstellung in den Fign. 6c bis 6e entnehmen lässt, ist an der der Verriegelungsvorrichtung gegenüber liegenden Aufnahmeplatte 14 ein Sensorelement 40 vorgegeben, das mit einem in einer Bohrung 41 des Kupplungskugelträgers 2 vorgesehenen Federstift 42 so zusammenwirkt, dass die Verriegelungsstellung des ersten Verriegelungselements 4 erkannt wird. Auch hierdurch wird eine verbesserte Sicherheit erreicht, da Fehlfunktionen des ersten Verriegelungselements 4, etwa ein Kabelbruch in der Stromversorgung des Elektromotors 9, erkannt werden.

Mit Hilfe der vorstehend beschriebenen Kupplungsvorrichtung bzw. der entsprechenden Verriegelungsvorrichtung wird eine Art doppelte Verriegelung für den Kupplungskugelträger erreicht. Selbst bei einem Ausfall des ersten Verriegelungselements bleibt der Kupplungskugelträger über das zweite Verriegelungselement sicher an dem Trägerelement gehalten, so dass gefährliche Fahrsituationen aufgrund eines Lösens der Fixierung und damit des Anhängerfahrzeugs vermieden werden.

## Patentansprüche

1. Kupplungsvorrichtung für ein Kraftfahrzeug mit einem Kupplungskugelträger (2), der an einer Trägeraufnahme (3) beweglich, insbesondere schwenkbeweglich, oder einsteckbar angeordnet oder anordenbar ist und über ein erstes Verriegelungselement (4) und über ein zweites Verriegelungselement (5) in einer Kuppelstellung fixierbar ist, wobei der Kupplungskugelträger (2) über das zweite Verriegelungselement (5) in redundanter Anordnung zu dem ersten Verriegelungselement (4) in der Kuppelstellung fixierbar ist, **dadurch gekennzeichnet, dass** das erste Verriegelungselement (4) und das zweite Verriegelungselement (5) über einen Antrieb (9) in seine Verriegelungsstellung und aus seiner Verriegelungsstellung bewegbar ist, und dass der Antrieb (9) ein elektromotorischer, hydraulischer oder pneumatischer Antrieb ist.

2. Kupplungsvorrichtung nach Anspruch 1, **dadurch gekennzeichnet, dass** die Fixierung über das erste Verriegelungselement (4) spielfrei und die Fixierung über das zweite Verriegelungselement (5) spielbehaftet ist.

3. Kupplungsvorrichtung nach Anspruch 1 oder Anspruch 2, **dadurch gekennzeichnet, dass** das erste Verriegelungselement (4) und/oder das zweite Verriegelungselement (5) durch eine Feder (6, 28) in Richtung ihrer jeweiligen Verriegelungsstellung belastet sind.

4. Kupplungsvorrichtung nach einem der vorhergehenden Ansprüche, **dadurch gekennzeichnet, dass** das zweite Verriegelungselement (5) über eine Feder (6) oder einen Antrieb selbsttätig, insbesondere unabhängig von dem ersten Verriegelungselement (4), in Richtung seiner Verriegelungsstellung bewegbar ist.

5. Kupplungsvorrichtung nach einem der vorhergehenden Ansprüche, **dadurch gekennzeichnet, dass** beim Lösen des ersten Verriegelungselements (4) das zweite Verriegelungselement (5) über ein Mitnahmeelement (7), insbesondere entgegen der Kraft einer Feder (6), mitgenommen wird.

6. Kupplungsvorrichtung nach Anspruch 5, **dadurch gekennzeichnet, dass** das Mitnahmeelement (7) nach Art einer frei drehbaren, an dem zweiten Verriegelungselement (5) angeordneten Wippe gestaltet ist.

7. Kupplungsvorrichtung nach einem der vorhergehenden Ansprüche, **dadurch gekennzeichnet, dass** das zweite Verriegelungselement (5) nach Art einer Raste ausgebildet ist und unter Erzeugung eines hörbaren Rastgeräuschs an dem Kupplungskugelträger (2) verrastet.

8. Kupplungsvorrichtung nach einem der vorhergehenden Ansprüche, **gekennzeichnet durch** eine Sensoreinheit (8), die die Kuppelstellung des Kupplungskugelträgers (2) an der Trägeraufnahme (3) erkennt.

9. Kupplungsvorrichtung nach Anspruch 8, **dadurch gekennzeichnet, dass** die Sensoreinheit (8) bei Erkennung der Kuppelstellung ein Signal abgibt, mit welchem ein motorischer Antrieb (9) zum Verriegeln des ersten Verriegelungselements (4) ansteuerbar ist.

10. Kupplungsvorrichtung nach einem der vorhergehenden Ansprüche, **dadurch gekennzeichnet, dass** der Kupplungskugelträger (2) mit Erreichen der Kuppelstellung über das zweite Verriegelungselement (5) gehalten wird.

11. Kupplungsvorrichtung nach einem der vorhergehenden Ansprüche, **dadurch gekennzeichnet, dass** das erste Verriegelungselement (4) und das zweite Verriegelungselement (5), insbesondere an der Trägeraufnahme (3) und/oder einem daran angeordneten Bauteil, zweckmäßigerweise einem Gehäuse einer Verriegelungsvorrichtung (10), voneinander unabhängig beweglich gelagert sind.

12. Kupplungsvorrichtung nach einem der vorhergehenden Ansprüche, **dadurch gekennzeichnet, dass** das erste Verriegelungselement (4) und/oder das zweite Verriegelungselement (5) eine Formschlusskontur zum Eingriff in eine insbesondere unmittelbar an dem Kupplungskugelträger (2) angeordnete Formschlusskontur aufweisen.

13. Kupplungsvorrichtung nach einem der vorhergehenden Ansprüche, **dadurch gekennzeichnet, dass** das erste Verriegelungselement (4) und/oder das zweite Verriegelungselement (5) einen Verriegelungsbolzen und/oder einen Verriegelungsvorsprung aufweisen.

## Claims

1. Coupling apparatus for a motor vehicle, with a coupling ball carrier (2) which is or may be mounted movably in particular pivotably on, or is or may be inserted in a carrier seating (3), and may be fixed in a coupling position through a first locking element (4) and a second locking element (5), wherein the coupling ball carrier (2) may be fixed in the coupling position through the second locking element (5) in a redundant arrangement to the first locking element (4), **characterised in that** the first locking element (4) and the second locking element (5) may be moved by a drive (9) into and out of their locking positions, and that the drive (9) is an electromotor, hydraulic or pneumatic drive.

2. Coupling apparatus according to claim 1, **characterised in that** fixing via the first locking element (4) is free from play and fixing via the second locking element (5) is liable to play.

3. Coupling apparatus according to claim 1 or claim 2, **characterised in that** the first locking element (4) and/or the second locking element (5) are biased by a spring (6, 28) in the direction of their respective position.

4. Coupling apparatus according to any of the preceding claims, **characterised in that** the second locking element (5) may be moved automatically via a spring (6) or a drive in the direction of its locking position, in particular independently of the first locking element (4).

5. Coupling apparatus according to any of the preceding claims **characterised in that**, when the first locking element (4) is released, the second locking element (5) is carried along by a driving element (7), in particular against the force of a spring (6).

6. Coupling apparatus according to claim 5, **characterised in that** the driving element (7) is in the form of a freely rotatable rocker fitted to the second locking element (5).

7. Coupling apparatus according to any of the preceding claims, **characterised in that** the second locking element (5) is in the form of a notch and engages with the coupling ball carrier (2) with an audible engaging sound.

8. Coupling apparatus according to any of the preceding claims, **characterised by** a sensor unit (8) which detects the coupling position of the coupling ball carrier (2) at the carrier seating (3).

9. Coupling apparatus according to claim 8, **characterised in that** the sensor unit (8), on detecting the coupling position, emits a signal which may be used to activate a powered drive (9) for locking the first locking element (4).

10. Coupling apparatus according to any of the preceding claims, **characterised in that** the coupling ball carrier (2) is held by the second locking element (5) on reaching the coupling position.

11. Coupling apparatus according to any of the preceding claims, **characterised in that** the first locking element (4) and the second locking element (5) are mounted so as to be movable independently of one another, in particular on the carrier seating (3) and/or on a component fitted to the latter, expediently a housing of a locking device (10).

12. Coupling apparatus according to any of the preceding claims, **characterised in that** the first locking element (4) and/or the second locking element (5) has or have an interlocking contour for engaging with an interlocking contour located in particular directly on the coupling ball carrier (2).

13. Coupling apparatus according to any of the preceding claims, **characterised in that** the first locking element (4) and/or the second locking element (5) has or have a locking pin and/or a locking projection,

## Revendications

1. Dispositif d'attelage pour un véhicule automobile, comprenant une support de boule d'attelage (2), qui est disposé ou peut être disposé au niveau d'un logement de support (3) de manière mobile, en particulier de manière mobile par pivotement, ou de manière enfichable et qui peut être fixé par l'intermédiaire d'un premier élément de verrouillage (4) et d'un deuxième élément de verrouillage (5) dans une position de couplage, sachant que le support de boule d'attelage (2) peut être fixé par l'intermédiaire du deuxième élément de verrouillage (5) selon un agencement redondant par rapport au premier élément de verrouillage (4) dans la position de couplage, **caractérisé en ce que** le premier élément de verrouillage (4) et le deuxième élément de verrouillage (5) peuvent être déplacés par l'intermédiaire d'un mécanisme d'entraînement (9) de manière à prendre leur position de verrouillage ou à sortir de leur position de verrouillage, et **en ce que** le mécanisme d'entraînement (9) est un mécanisme d'entraînement électromotorisé, hydraulique ou pneumatique.

2. Dispositif d'attelage selon la revendication 1, **caractérisé en ce que** la fixation par l'intermédiaire du premier élément de verrouillage (4) est exempte de jeu, et **en ce que** la fixation par l'intermédiaire du deuxième élément de verrouillage (5) se fait avec un certain jeu.

3. Dispositif d'attelage selon la revendication 1 ou la revendication 2, **caractérisé en ce que** le premier élément de verrouillage (4) et/ou le deuxième élément de verrouillage (5) sont sollicités par un ressort (6, 28) dans la direction de leur position de verrouillage respective.

4. Dispositif d'attelage selon l'une quelconque des revendications précédentes, **caractérisé en ce que** le deuxième élément de verrouillage (5) peut être déplacé en direction de sa position de verrouillage, par l'intermédiaire d'un ressort (6) ou d'un mécanisme d'entraînement en toute autonomie, en particulier indépendamment du premier élément de verrouillage (4).

5. Dispositif d'attelage selon l'une quelconque des revendications précédentes, **caractérisé en ce que** lors du détachement du premier élément de verrouillage (4), le deuxième élément de verrouillage (5) est entraîné par l'intermédiaire d'un élément entraîneur (7), en particulier contre la force d'un ressort (6).

6. Dispositif d'attelage selon la revendication 5, **caractérisé en ce que** l'élément entraîneur (7) est configuré à la manière d'une bascule pouvant tourner librement, disposée au niveau du deuxième élément de verrouillage (5).

7. Dispositif d'attelage selon l'une quelconque des revendications précédentes, **caractérisé en ce que** le deuxième élément de verrouillage (5) est réalisé à la manière d'un cran et s'enclenche au niveau du support de boule d'attelage (2) en produisant un bruit audible lié à l'enclenchement.

8. Dispositif d'attelage selon l'une quelconque des revendications précédentes, **caractérisé par** une unité de détection (8) qui détecte la position de couplage du support de boule d'attelage (2) au niveau du logement de support (3).

9. Dispositif d'attelage selon la revendication 8, **caractérisé en ce que** l'unité de détection (8) émet un signal dès lors que la position de couplage a été détectée, lequel signal permet de commander un mécanisme d'entraînement (9) motorisé servant à verrouiller le premier élément de verrouillage (4).

10. Dispositif d'attelage selon l'une quelconque des revendications précédentes, **caractérisé en ce que** le support de boule d'attelage (2) est maintenu lorsque la position de couplage est atteinte par l'intermédiaire du deuxième élément de verrouillage (5).

11. Dispositif d'attelage selon l'une quelconque des revendications précédentes, **caractérisé en ce que** le premier élément de verrouillage (4) et le deuxième élément de verrouillage (5) sont logés de manière mobile indépendamment l'un de l'autre, en particulier au niveau du logement de support (3) et/ou au niveau d'un composant disposé sur ce dernier, de manière appropriée au niveau d'un boîtier d'un dispositif de verrouillage (10).

12. Dispositif d'attelage selon l'une quelconque des revendications précédentes, **caractérisé en ce que** le premier élément de verrouillage (4) et/ou le deuxième élément de verrouillage (5) présentent un contour de complémentarité de forme destiné à venir en prise avec un contour de complémentarité de forme disposé en particulier directement au niveau du support de boule d'attelage (2).

13. Dispositif d'attelage selon l'une quelconque des revendications précédentes, **caractérisé en ce que** le premier élément de verrouillage (4) et/ou le deuxième élément de verrouillage (5) présentent un boulon de verrouillage et/ou une partie de verrouillage faisant saillie.
